# EUROPÄISCHE PATENTSCHRIFT

(11) **EP 0 548 140 B1**
(45) Veröffentlichungstag und Bekanntmachung des Hinweises auf die Patenterteilung: **20.07.1994**
(21) Anmeldenummer: 91915952.5
(22) Anmeldetag: 14.09.1991
(51) Int. Cl.: F16H 57/04

(54) **VORRICHTUNG ZUM AUSTAUSCH VON SCHMIERMITTEL EINES AGGREGATS**
DEVICE FOR CHANGING GEARBOX OIL
DISPOSITIF DE RENOUVELLEMENT DU LUBRIFIANT DANS UN ORGANE

(30) Priorität: 18.09.1990 DE 4029507
(43) Veröffentlichungstag der Anmeldung: 30.06.1993
(73) Patentinhaber: ZAHNRADFABRIK FRIEDRICHSHAFEN AG, 88015 Friedrichshafen (DE)
(72) Erfinder: WOLF, Andreas, D-7992 Tettnang (DE); MAGG, Alfred, D-7990 Friedrichshafen (DE)
(86) Internationale Anmeldenummer: EP9101752
(87) Internationale Veröffentlichungsnummer: WO9205375

(56) Entgegenhaltungen:
- DE-A- 3 026 994
- DE-A- 3 237 032
- DE-B- 2 526 139

## Beschreibung

Die Erfindung bezieht sich auf eine Vorrichtung zum Austausch von Schmiermittel eines Aggregats, insbesondere eines Getriebes, mit Behältern zum Speichern von verbrauchtem Schmiermittel, das im Aggregat eingeschlossen ist und zum Speichern von unverbrauchtem Schmiermittel, das durch eine Pumpe über eine Verbindungsleitung und ein Wegeventil in das Aggregat gefördert wird, wobei das Gewicht und/oder Volumen des aus dem Aggregat entfernten und/oder in das Aggregat geförderten Schmiermittels erfaßt und mit zumindest einem vorgegebenen Sollwert verglichen wird.

Auf vielen Gebieten der Technik kommen Getriebe zur Anwendung, die sich insbesondere durch ihre hohe Übersetzung sowie eine große Belastbarkeit auszeichnen. Diesen Getrieben ist in der Regel gemeinsam, daß das Schmiermittel in regelmäßigen Abständen ausgetauscht werden muß, um die Verfügbarkeit und Zuverlässigkeit zu gewährleisten. Bei den bekannten Verfahren zum Austausch von Schmiermittel wird, nach Erreichen einer vorgegebenen Anzahl von Betriebsstunden oder beispielsweise nach Erreichen einer bestimmten Laufleistung bzw. sonstiger für die Wartung relevanter Betriebsdaten, das im Aggregat befindliche Schmiermittel entfernt. Dieses verbrauchte Schmiermittel kann beispielsweise, wie bei Kfz-Getrieben üblich, abgesaugt werden. Das verbrauchte Schmiermittel wird durch neues Schmiermittel ersetzt. Diese Verfahren sind sowohl zeit- und personalaufwendig. Nachteilig ist vor allem, daß diese Verfahren doch beträchtliche Risiken in sich bergen, da eine fehlerhafte Wartung, beispielsweise durch unvollständigen oder ungenügenden Austausch von Schmiermittel nicht ausgeschlossen werden kann. Zu diesen Nachteilen tritt erschwerend hinzu, daß der Vorgang des Schmiermittelaustausches nur schlecht dokumentierbar ist. Zusammengefaßt sind diese Verfahren zeitaufwendig, fehleranfällig (nicht fullproof), mannabhängig und nur schlecht dokumentierbar.

Aus der DE-A 30 26 994 ist eine Vorrichtung nach dem Gattungsbegriff bekanntgeworden. Bei dieser Vorrichtung zum Austausch von Schmiermittel werden zwei separate Verbindungsleitungen zur Verbindung zweier Behälter mit einem 3/2-Wegeventil verwendet. In einer Verbindungsleitung ist eine Pumpe so angeordnet, daß sie dem Wegeventil vorgeschaltet ist. Das verbrauchte Schmiermittel wird über die weitere Verbindungsleitung abgelassen. Bei dieser Vorrichtung ist nachteilig, daß sich die abgeführte Schmiermittelmenge nicht in eindeutiger Weise kontrollieren und dokumentieren läßt.

Der vorliegenden Erfindung liegt die Aufgabe zugrunde, den Prozeß der Nachschmierung eines Aggregats zu vereinfachen, zuverlässig und reproduzierbar sowie dokumentierbar zu gestalten und gleichzeitig den erforderlichen Zeitund Personalaufwand zu reduzieren.

Die der Erfindung zugrunde liegende Aufgabe wird dadurch gelöst, daß über das Wegeventil jeweils eine der Leitungen der Behälter mit der Pumpe verbindbar ist, und daß die Förderrichtung der Pumpe reversierbar ist. Gegenüber dem Stand der Technik unterscheidet sich die erfindungsgemäße Lösung in vorteilhafter Weise dadurch, daß über das Wegeventil jeweils eine der Leitungen der Behälter mit der Pumpe verbindbar ist, wobei deren Förderrichtung reversierbar ist. Der Schmiermittelaustausch erfolgt somit in jedem Fall durch die Förderwirkung der Pumpe, die dem Wegeventil nachgeschaltet ist. Sowohl die abgeführte als auch die zugeführte Menge an Schmiermittel läßt sich in eindeutiger Weise kontrollieren und dokumentieren. Ebenso ist ein Vergleich zwischen der abgeführten und zugeführten Schmiermittelmenge möglich. Da die Förderrichtung der Pumpe reversierbar ist, kann für den Austausch von Schmiermittel eine gemeinsame Pumpe verwendet werden. Die Pumpe kann beispielsweise von einem Elektromotor angetrieben werden, so daß eine Fernbedienung ohne weiteres möglich ist.

Zur Erfassung des Volumens des geförderten Schmiermittels kann der Pumpe ein Meßgerät vor- oder nachgeschaltet werden.

Eine wesentliche Voraussetzung für einen automatisierten Austausch von Schmiermittel ist dann erfüllt, wenn das Wegeventil und die Pumpe an eine gemeinsame Steuereinheit angeschlossen sind. In diesem Fall ist es sinnvoll, das Volumenmeßgerät zusätzlich an die Steuereinheit anzuschließen. Um die Eingabe von aggregat-spezifischen Daten zur selbsttätigen Steuerung bzw. Regelung des Austausches von Schmiermittel zu ermöglichen, weist die Steuereinheit ein Tastenfeld auf. Über dieses Tastenfeld kann beispielsweise ein Code eingegeben werden, der die Steuereinheit dazu veranlaßt, den Austausch von Schmiermittel nach prozeßspezifischen Daten vorzunehmen.

Um mit der erfindungsgemäßen Vorrichtung unterschied liche Aggregate warten zu können, ist es besonders vorteilhaft, wenn die Steuereinheit einen Speicher zur Aufnahme von aggregat-spezifischen Soll-Werten aufweist. Zu diesen Werten zählt beispielsweise die Code-Nummer, das Schmiermittelvolumen, Angaben über die vorgeschriebenen Wartungsintervalle usw.

Weitere für die Erfindung wesentliche Merkmale und die hieraus resultierenden Vorteile sind der nachfolgenden Beschreibung von Ausführungsbeispielen einer erfindungsgemäßen Vorrichtung anhand der Abbildung zu entnehmen:

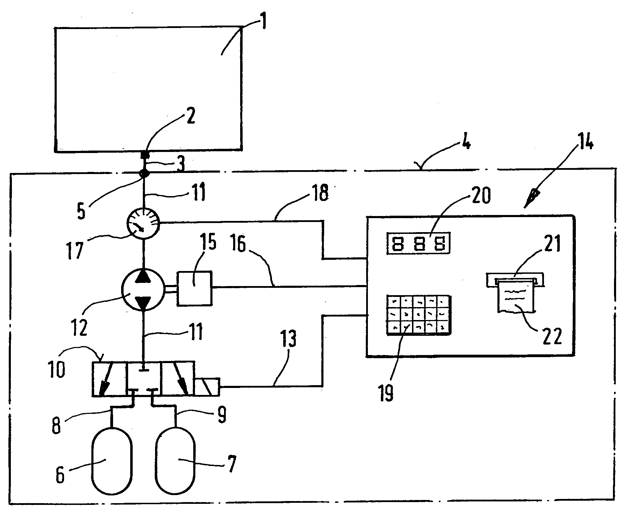

In der Abbildung 1 ist eine Vorrichtung zum Austausch von Schmiermittel eines Aggregats 1 schematisch dargestellt. Bei dem Aggregat 1 handelt es sich um ein Bauteil, das einen regelmäßigen Austausch von Schmiermittel erfordert. Bei diesem Aggregat 1 kann es sich beispielsweise um ein Getriebe handeln. Im vorliegenden Fall wird die erfindungsgemäße Vorrichtung zur Wartung von hoch übersetzenden bzw. hoch belasteten Stellgetrieben in der Luftfahrt eingesetzt. Diese Stellgetriebe werden beispielsweise zum Ein- und Ausfahren von Tragflächenbestandteilen verwendet. Es handelt sich hier um Getriebe, die einen regelmäßigen Austausch von Schmiermittel erforderlich machen, wobei dieser Austausch aus Sicherheitsgründen absolut zuverlässig erfolgen muß. In diesem Zusammenhang sei ergänzend erwähnt, daß der Prozeß der Nachschmierung nur am im Fluggerät eingebauten Getriebe erfolgen kann.

Das Aggregat 1 weist zumindest einen Anschluß 2 auf, der über eine lösbare Verbindungsleitung 3 mit einer Vorrichtung 4 zum Austausch von Schmiermittel verbunden ist. Die Verbindungsleitung 3 ist über einen weiteren Anschluß 5 an die Vorrichtung 4 angeschlossen.

Die Anschlüsse 2 und 5 sind vorzugsweise als Schnellverschlüsse ausgestaltet.

Die Vorrichtung 4 dient zunächst zur Aufnahme von zwei Behältern 6 und 7. Der Behälter 6 dient der Aufnahme des auszutauschenden, verbrauchten Schmiermittels. Im zweiten Behälter 7 befindet sich das nachzufüllende, im Neuzustand befindliche Schmiermittel. Es kann sich hierbei beispielsweise um ein bei Raumtemperatur fließfähiges Semi-Fluid handeln. Der Behälter 6 ist über eine Leitung 8 und der Behälter 7 ist über eine Leitung 9 am Wegeventil 10 angeschlossen. Vom Wegeventil 10 zweigt eine Verbindungsleitung 11 ab, die mit einer Pumpe 12 verbunden ist.

Bei dem Wegeventil 10 handelt es sich um ein Wegeventil, das elektromagnetisch betätigbar ist. Hierzu ist das Wegeventil 10 über eine elektrische Leitungsverbindung 13 an eine Steuereinheit 14 angeschlossen.

Als Pumpe 12 wird eine Pumpe eingesetzt, die in ihrer Förderrichtung reversibel ist. Die Pumpe 12 wird von einem Motor 15 angetrieben. Bei dem Motor 15 handelt es sich vorzugsweise um einen Elektro- oder Druckluftmotor. Vom Motor 15 führt eine elektrische Leitungsverbindung 16 zur Steuereinheit 14.

Die bereits erwähnte Verbindungsleitung 11 führt innerhalb der Vorrichtung 4 von der Pumpe 12 zum Anschluß 5. Zur Erfassung des Volumens des ausgetauschten Schmiermittels ist in der Verbindungsleitung 11 ein Meßgerät 17 zur Erfassung eines Volumenstroms bzw. eines Volumens (innerhalb einer bestimmten Förderdauer) des geförderten Schmiermittels eingeschaltet. Auch dieses Meßgerät ist über eine elektrische Leitungsverbindung 18 an die Steuereinheit 14 angeschlossen.

Die Steuereinheit ist mit einem Tastenfeld 19 versehen. Über das Tastenfeld 19 können alpha-numerische Eingaben getätigt werden. Beispielsweise ist die Eingabe von aggregat-spezifischen Daten möglich, mit der der Austausch von Schmiermittel selbsttätig gesteuert bzw. geregelt werden kann. Zu diesen aggregat-spezifischen Daten zählt beispielsweise ein bestimmter Code zur Kennung des angeschlossenen Aggregats. Zu diesen Daten können ferner Volumenangaben zählen, die Aufschluß über das aus dem Aggregat entnommene bzw. in das Aggregat geförderte Schmiermittel geben.

Ein Display 20 zeigt einen Volumenstrom oder auch die Zeitdauer, die zum Entnehmen des verbrauchten Schmiermittels und/oder für das Füllen des Aggregats mit unverbrauchtem Schmiermittel benötigt wird, visuell an.

Die Steuereinheit 14 wird durch einen Drucker 21 vervollständigt, mit dem die Ausgabe eines Meßprotokolls 22 möglich ist.

Die vorstehend beschriebene Vorrichtung kann wie folgt betrieben werden:

Mit Hilfe der Verbindungsleitung 3 wird die Vorrichtung 4 an das zu wartende Aggregat 1 angeschlossen. Über die als Schnellverschlüsse ausgebildeten Anschlüsse 2 und 5 ist dies einfach möglich. In der zeichnerisch dargestellten Schaltstellung des Wegeventils 10 ist der Behälter 6 über die Leitung 8 und die Verbindungsleitung 11 und die (außerhalb der Vorrichtung 4 liegende) Verbindungsleitung 3 an das Aggregat 1 angeschlossen.

Es wird jetzt dafür gesorgt, daß das im Aggregat 1 eingeschlossene, verbrauchte Schmiermittel abgepumpt und in den Behälter 6 eingebracht wird. Hierzu wird die Pumpe 12 über den Motor 15 in einer ersten Förderrichtung angetrieben.

Der Verfahrensschritt des Entnehmens des verbrauchten Schmiermittels aus dem Aggregat 1 kann automatisch ablaufen, wenn dem Steuergerät über das Tastenfeld 19 entweder ein Code zur Kennung des Aggregats oder bestimmte prozeß-spezifische Angaben gemacht wird bzw. werden. Nach dem Starten des Verfahrensschritts wird das Wegeventil 10 in die linke Position geschaltet, die Pumpe 12 wird in Betrieb genommen und die Zeitdauer dieses Vorgangs wird erfaßt. Über die gemessene Zeitdauer ergibt sich, gegebenenfalls mit Unterstützung des Meßgeräts 17 zur Erfassung des Volumenstroms, ein bestimmtes Volumen des entnommenen Schmiermittels, das entweder über das Display 20 visuell angezeigt wird oder nach Ablauf einer bestimmten Zeitdauer in der Weise quittiert wird, daß der Verfahrensschritt selbsttätig beendet wird.

Der Verfahrensschritt des Entfernens des verbrauchten Schmiermittels kann mit seinen prozeß-spezifischen Daten, wie beispielsweise Zeitdauer, Volumenstrom, Aggregate, Kennung usw., gespeichert und auch durch Ausdruck im Meßprotokoll 22 als Zwischenergebnis protokolliert werden.

Nach Beenden des Abpumpvorgangs wird dafür gesorgt, daß neues, unverbrauchtes Schmiermittel in das Aggregat 1 gefördert wird. Voraussetzung hierfür ist zunächst, daß das Wegeventil 10 in eine Schaltposition überführt wird, in der der Behälter 7 über die Leitung 9, die Verbindungsleitung 11 und die Verbindungsleitung 3 mit dem Aggregat 1 verbunden wird. Die Pumpe 12 wird in der zweiten Förderrichtung betrieben, so daß das unverbrauchte Schmiermittel aus dem Behälter 7 in das Aggregat 1 gefördert wird. Bei diesem Vorgang wird wiederum der Volumenstrom über das Meßgerät 17 bzw. die Zeitdauer des Fördervorgangs gemessen und gegebenenfalls im Display 20 angezeigt.

Das Befüllen des Aggregats 1 mit unverbrauchtem Schmiermittel kann manuell durch die Wartungsperson beendet werden, wenn eine vorgegebene Zeitdauer des Fördervorgangs erreicht ist bzw. wenn ein vorgegebenes Schmiermittelvolumen erreicht ist. Wurden diese Daten zuvor durch das Tastenfeld 19 der Steuereinheit 14 mitgeteilt, kann der Fördervorgang auch selbsttätig beendet werden. Es ist selbstverständlich auch eine Regelung des Fördervorgangs in der Weise möglich, daß das Volumen des geförderten Schmiermittels direkt oder indirekt erfaßt und selbsttätig mit einem vorgegebenen Sollwert verglichen wird. Ist der Ist-Wert deckungsgleich mit dem Soll-Wert, wird der Fördervorgang beendet. Die Wartung des Aggregats ist beendet, so daß lediglich die Verbindungsleitung 3 vom Anschluß 2 gelöst wird. Das Entleeren bzw. Befüllen des Aggregats 1 wird hinsichtlich der prozeß-spezifischen Daten (Aggregate, Kennung, Zeitpunkt und Zeitdauer des Entleerens bzw. Befüllens, Schmiermittelmenge, Kenndaten des Wartungspersonals usw.) festgehalten und/oder im Meßprotokoll 22 ausgewiesen. Der Wartungsvorgang ist somit jederzeit reproduzierbar und beweiskräftig protokollierbar.

### Bezugszeichen

- 1: Aggregat
- 2: Anschluß
- 3: Verbindungsleitung
- 4: Vorrichtung
- 5: Anschluß
- 6: Behälter
- 7: Behälter
- 8: Leitung
- 9: Leitung
- 10: Wegeventil
- 11: Verbindungsleitung
- 12: Pumpe
- 13: elektrische Leitungsverbindung
- 14: Steuereinheit
- 15: Motor
- 16: elektrische Leitungsverbindung
- 17: Meßgerät
- 18: elektrische Leitungsverbindung
- 19: Tastenfeld
- 20: Display
- 21: Drucker
- 22: Meßprotokoll

## Patentansprüche

1. Vorrichtung zum Austausch von Schmiermittel eines Aggregats (1), insbesondere eines Getriebes, mit Behältern (6, 7) zum Speichern von verbrauchtem Schmiermittel, das im Aggregat (1) eingeschlossen ist und zum Speichern von unverbrauchtem Schmiermittel, das durch eine Pumpe (12) über eine Verbindungsleitung (11) und ein Wegeventil (10) in das Aggregat (1) gefördert wird, wobei das Gewicht und/ oder Volumen des aus dem Aggregat (1) entfernten und/oder in das Aggregat (1) geförderten Schmiermittels erfaßt und mit zumindest einem vorgegebenen Sollwert verglichen wird, dadurch **gekennzeichnet**, daß über das Wegeventil (10) jeweils eine der Leitungen (8 oder 9) der Behälter (6, 7) mit der Pumpe (12) verbindbar ist, und daß die Förderrichtung der Pumpe (12) reversierbar ist.

2. Vorrichtung nach Anspruch 1, dadurch **gekennzeichnet**, daß der Pumpe (12) ein Meßgerät (17) zur Erfassung eines Volumenstroms bzw. eines Volumens des geförderten Schmiermittels vor- oder nachgeschaltet ist.

3. Vorrichtung nach Anspruch 1, dadurch **gekennzeichnet**, daß das Wegeventil (10) und die Pumpe (12) an eine Steuereinheit (14) angeschlossen sind.

4. Vorrichtung nach den Ansprüchen 2 und 3, dadurch **gekennzeichnet**, daß das Meßgerät (17) zusätzlich an die Steuereinheit (14) angeschlossen ist.

5. Vorrichtung nach Anspruch 3, dadurch **gekennzeichnet**, daß die Steuereinheit (14) ein Tastenfeld (19) zur Eingabe aggregat-spezifischer Daten zur selbsttätigen Steuerung bzw. Regelung des Austauschs von Schmiermittel aufweist.

6. Vorrichtung nach den Ansprüchen 3 oder 5, dadurch **gekennzeichnet**, daß die Steuereinheit (14) einen Speicher zur Speicherung von aggregat-spezifischen Sollwerten beinhaltet.

## Claims

1. A device for changing the lubricant of a unit (1), particularly of a gearbox, with containers (6, 7) for storing used lubricant which is contained in the unit (1) and for storing fresh lubricant which is delivered to the unit (1) by a pump (12) via a connecting line (11) and a directional control valve (10), wherein the weight and/or volume of the lubricant removed from the unit (1) and/or delivered to the unit (1) is recorded and compared with at least one pre-specified setpoint value, characterised in that the container (6, 7) is connectable to the pump (12) via the directional control valve (10) of one of the lines (8 or 9), and that the delivery direction of the pump (12) is reversible.

2. A device according to claim 1, characterised in that the pump (12) is connected upstream or downstream of a measuring device (17) for recording a volumetric flow or a volume of the delivered lubricant.

3. A device according to claim 1, characterised in that the directional control valve (10) and the pump (12) are connected to a control unit (14).

4. A device according to claims 2 and 3, characterised in that the measuring device (17) is additionally connected to the control unit (14).

5. A device according to claim 3, characterised in that the control unit (14) has a key pad (19) for entering unit-specific data for automatically controlling or regulating the lubricant change.

6. A device according to claim 3 or 5, characterised in that the control unit (14) contains a memory for storing unit-specific setpoint values.

## Revendications

1. Dispositif pour changer le lubrifiant d'un organe (1), notamment d'une boîte de transmission, comportant des réservoirs (6, 7) pour stocker du lubrifiant usagé contenu dans l'organe (1) et pour stocker du lubrifiant frais qui est refoulé dans l'organe (1) par une pompe (12) à travers un conduit de raccordement (11) et un distributeur (10), où le poids et/ou le volume du lubrifiant prélevé de l'organe (1) et/ou refoulé dans l'organe (1) est mesuré et comparé à au moins une valeur prescrite prédéterminée, **caractérisé** en ce que la pompe (12) est susceptible d'être raccordée par le distributeur (10) à chacun des conduits (8 ou 9) des réservoirs (6, 7) et en ce que le sens de refoulement de la pompe (12) est réversible.

2. Dispositif selon la revendication 1, **caractérisé** en ce que la pompe (12) est précédée ou suivie d'un appareil de mesure (17) pour mesurer un débit ou un volume du lubrifiant refoulé.

3. Dispositif selon la revendication 1, **caractérisé** en ce que le distributeur (10) et la pompe (12) sont raccordés à une unité de commande (14).

4. Dispositif selon les revendications 2 et 3, **caractérisé** en ce que l'appareil de mesure (17) est raccordé en outre à l'unité de commande (14).

5. Dispositif selon la revendication 3, **caractérisé** en ce que l'unité de commande (14) comporte un clavier (19) pour l'entrée de données spécifiques de l'organe, pour commander ou régler automatiquement le changement de lubrifiant.

6. Dispositif selon la revendication 3 ou 5, **caractérisé** en ce que l'unité de commande (14) contient une mémoire pour mémoriser des valeurs prescrites spécifiques de l'organe.
